# EUROPEAN PATENT APPLICATION

(11) **EP 4 825 540 A1**
(43) Date of publication of application: **21.10.2026**
(21) Application number: 25305568.5
(22) Date of filing: 17.04.2025
(51) Int. Cl.: B25J 9/16, G06V 20/70, G06F 40/30

(54) **A METHOD FOR CONTROLLING A DEVICE FOR EXECUTING A KINEMATIC TASK IN A SCENE**

(71) Applicant: TOYOTA JIDOSHA KABUSHIKI KAISHA, Toyota-shi, Aichi-ken, 471-8571 (JP)
(72) Inventor: DESPINOY, Fabien, 1140 BRUSSELS (BE); CHISARI, Eugenio, 79110 FREIBURG (DE); OLE VON HARTZ, Jan, 79110 FREIBURG (DE); VALADA, Abhinav, 79110 FREIBURG (DE)
(74) Representative: Cabinet Beau de Loménie

(57) **Abstract**

A method for controlling a device for executing a kinematic task in a scene, said method comprising:
- a) Receiving an instruction in at least Natural Language, wherein said instruction comprises at least a semantic information related to said scene,
- b) Obtaining grounded semantic information of said scene from a conversion of a visual description of an image of said scene into semantic information,
- c) Based on said grounded semantic information and on said semantic information related to said scene comprised in said instruction, determining whether said instruction can be executed, and when said instruction cannot be executed,
- d) Generating at least a query in natural language, said query comprising a request for providing at least additional semantic information related to said scene,
- e) Receiving a response to said at least one query and iterate c) to e),
- f) controlling the device for executing a kinematic task based on said instruction when said instruction can be executed.

## Description

### BACKGROUND OF THE INVENTION

### 1. Field of the invention

The present disclosure relates to a method for controlling a device located in a scene, for executing an instruction. The present disclosure relates also to a method for identifying an object in a scene and more precisely for detecting a personalized instance of an object in a scene.

### 2. Description of Related Art

The present invention can find an application in robotic tack ambiguity resolution via natural language interaction.

Generalization of novel and diverse scenarios has long been a critical objective in robotic policy learning. A promising approach to achieve this goal is through natural language task specification, which offers a powerful and intuitive medium for human-robot interaction, as disclosed in references [1], [2] and [3]. By leveraging the expressiveness and flexibility of human language, we can train generalist policies capable of handling a wide range of scenarios.

Language-conditioned policies must integrate information from multiple modalities, including the language task description, visual observations, and the appropriate actions required to accomplish the task. Given the success of Vision-Language Models (VLMs) in other domains, they have gained significant interest in robotics. Using VLMs zero-shot, as disclosed in references [4] and [5] as well as fine-tuning them into Vision-Language-Action models (VLAs) as disclosed in references [3], [6], [7] and [8] has shown promising results in challenging tasks such as folding a t-shirt and wiping a table.

These methods take advantage of the richness of web-scale data encoded in pre-trained foundation models to enhance the generalization capabilities of their proposed robot policies. However, all aforementioned language-conditioned imitation learning policies are inherently reactive, mapping observations directly to actions without intermediate reasoning. To address this limitation, recent work has explored integrating planning as disclosed in references [9] and [10] and chain-of-thought reasoning, as disclosed in reference [11] into action generation, enabling more deliberate and thoughtful decision-making.

Despite these advancements, existing methods often assume that language goals are clear and well-defined. In unstructured real-world environments, however, language goals with respect to an environment can be ambiguous, leading to policy failures. Ambiguous task descriptions represent a significant yet overlooked challenge, as they can result in misinterpretations by the agent and reduce the rate of successful task completion. To mitigate task failures, prior works have investigated how humans can provide corrective feedback to guide policy execution, as disclosed in references [12], [13], [14] and [15] and how failure detection mechanisms can trigger retrial behaviors when the task outcome does not match the specified goal as disclosed in references [16], [17] and [18]. While effective, these approaches employ reactive mechanisms that are only triggered after a failure has occurred or is about to occur.

### SUMMARY

The object of the present invention is to at least substantially remedy some of the above-mentioned drawbacks. In this respect, the present disclosure notably relates to a novel method for controlling a device for executing a kinematic task in a scene.

Thus, the present disclosure concerns a method for controlling a device for executing a kinematic task in a scene, said method comprising:
- a) Receiving an instruction in at least Natural Language, wherein said instruction comprises at least a semantic information related to said scene,
- b) Obtaining grounded semantic information of said scene from a conversion of a visual description of an image of said scene into semantic information,
- c) Based on said grounded semantic information and on said semantic information related to said scene comprised in said instruction, determining whether said instruction can be executed, and when said instruction cannot be executed,
- d) Generating at least a query in natural language, said query comprising a request for providing at least additional semantic information related to said scene,
- e) Receiving a response to said at least one query and iterate c) to e),
- f) controlling the device for executing a kinematic task based on said instruction when said instruction can be executed.

The present disclosure proposes a novel approach to address instruction ambiguity by grounding language goals in visual observations. It can interpret the natural language instruction description within the context of the observed scene and may assess the clarity or ambiguity of the specified instruction. In can enable reasoning about the task description itself, to preemptively identify and resolve ambiguities, thereby preventing many failures that could arise from unclear goals of the instruction

When task ambiguity is detected, the instruction cannot be executed and a clarification using natural language grounded in the observed scene is requested.

The disclosed method can formulate relevant questions, interpret human responses, and resolve ambiguities in the original instruction description. The present disclosure can improve the robustness and reliability of downstream language-conditioned policies, increasing in some configurations, average success rate by 27.5 percentage points.

Thanks to the present disclosure, ambiguities in the semantic description of the instruction can be detected and corrected so that potential failures are prevented before they can happen.

While demonstrating interesting results, state-of-the-art methods only use the image observation of the scene to query off-the-shelf object detectors, limiting the task ambiguity reasoning solely to the text modality. Therefore, these methods fail when encountering ambiguities based on object semantics not captured by the specific detector used. In opposition to these methods, the present disclosure can address the task ambiguity resolution problem from a multi-modal perspective, reasoning on both the language task description and the visual observation of the scene.

A "grounded semantic description" is a semantic description that is explicitly tied to a perceptible element (image, video, sound, real-world object, etc.). It anchors concepts in concrete real-world elements, the ones of the scene in the present disclosure. It gives a personalized description of one instance of an object associated with the class of the object. In the present disclosure, the semantic information associated with an object in the instruction can be the class of an object. The grounded semantic information of the object can be the class of the object associated with at least one attribute of the object determined to distinguish said object among a plurality of objects of the same class. Said attribute can be related to the color, the size, the location in the image of the scene. In some cases, several attributes may be needed to distinguish one instance from another, for instance when there are several blue cups, it may be needed to distinguish them by adding an attribute related to their size, or to their position in the scene.

Therefore, grounded semantic information is in opposition to the semantic information used in the present disclosure which is a textual representation of the meaning of an object or scene without necessarily being tied to a specific perceptual reference. Semantic information can be abstract or generic, without a direct connection to a real-world image or visual element.

As mentioned earlier, a semantic information can comprise an object identified by a class and one or more attributes.

More generally, a "semantic description" can be abstract, whereas a "grounded semantic description" is specific to a real visual or sensory perception. In other words, a grounded semantic information can be used to determine a specific or personalized instance of an object in the scene. In other words, a grounded semantic information can be used to determine the unicity of an object in a scene.

Once the response to the query is received, additional semantic information is received in the response and this additional semantic information enriches the prior semantic information of the instruction. Therefore, based on said grounded semantic information and on the semantic information related to said scene comprised in the instruction and updated by the semantic information received in the response, it is determined whether said instruction can be executed, and when said instruction cannot be executed.

According to some embodiments, said instruction comprises semantic information associated with at least one object of said scene and said grounded semantic information is associated with at least one object of said scene.

According to some embodiments, determining whether said instruction can be executed, is based on said grounded information related to said object and to said semantic information related to said object comprised in said instruction and said query comprises a request for providing at least additional semantic information related to said object in said scene.

According to some embodiments, determining whether said instruction can be executed comprises
- Determining if said at least one object which semantic information is comprised in said instruction can be identified in said at least one image of said scene,

According to some embodiments, determining whether said instruction can be executed comprises
- Comparing said grounded semantic information of said scene and said semantic information of the scene comprised in the instruction.

According to some embodiments, determining whether said instruction can be executed comprises
- Determining the class of at least an object in the semantic information associated with the instruction,
- Selecting the instances of objects in the image of said scene having the same class as the class of the at least one object in said instruction,
- Based on grounded semantic information associated with said instances of said at least one object and the semantic information associated with the object of said class in the instruction,
   a. Determining if said object which class is comprised in said semantic information associated with said instruction is uniquely identified among said selected instances,
   b. Determining that said instruction cannot be executed if said instance cannot be uniquely identified and
   c. Determining that said instruction can be executed if said instance can be uniquely identified.

According to some embodiments, the method further comprises, when said object which semantic information is comprised in said instruction cannot be uniquely identified in said scene,
- Identifying at least one additional grounded semantic information associated with said object not uniquely identified wherein said additional grounded semantic information enables to characterize uniquely said object,
Wherein said query comprises a request to select said object according to said additional grounded semantic information.

According to some embodiments, receiving a response to said at least one query comprises one of:
- Receiving a response in natural language,
- Receiving a visual response as a pointer identifying at least one location on said image.

According to some embodiments, said query comprises at least information in natural language for explaining the reason why the instruction is not executed.

In opposition to state-of-the-art methods which usually provide a binary output for indicating that the instruction cannot be executed, according to this embodiment, additional explanations can be provided for guiding the response to the query and providing better response and also faster convergence for obtaining an appropriate response to the query.

According to some embodiments, obtaining grounded semantic information of said scene from a conversion of a visual description of an image of said scene into semantic information, comprises
- Detecting in an image of said scene, said at least one object which semantic information is comprised in said instruction,
- Associating with at least said object which semantic information is comprised in said instruction, at least grounded semantic information of said object.

According to some embodiments, said grounded semantic information is obtained using a visual language model (VLM).

In some embodiments, Molmo, reference [29], can be used as VLM, given its unique object pointing skill, which will allow detecting and grounding objects in the image directly via the VLM, without requiring a separate open vocabulary object detector.

According to some embodiments the method further comprises, prior to executing said instruction when said instruction can be executed further to said response,
- obtaining special coordinates of said at least one object,
- segmenting said object using said special coordinates as a prompt input to a segmentation model.

The present invention concerns also a robot for executing a kinematic task in a scene, comprising:
- an interface for receiving an instruction in at least Natural Language, wherein said instruction comprises at least a semantic information related to said scene,
- a processor for
   a) Obtaining grounded semantic information of said scene from a conversion of a visual description of an image of said scene into semantic information,
   b) Based on said grounded semantic information and on said semantic information related to said scene comprised in said instruction, determining whether said instruction can be executed, and when said instruction cannot be executed,
   c) Generating at least a query in natural language, said query comprising a request for providing at least additional semantic information related to said scene,
   d) Receiving a response to said at least one query and iterate b) to d),
   e) Executing a kinematic task based on said instruction when said instruction can be executed.

According to another aspect, the present disclosure concerns a method for identifying an object in a scene, said method comprising
a) Receiving an instruction in at least Natural Language, wherein said instruction comprises at least a semantic information related to said object,
b) Obtaining grounded semantic information of said scene from a conversion of a visual description of an image of said scene into semantic information,
c) Based on said grounded semantic information and on said semantic information related to said scene comprised in said instruction, determining whether said object can be identified,
d) Generating at least a query in natural language, said query comprising a request for providing at least additional semantic information related to said object,
e) Receiving a response to said at least one query and iterate c) to e),
f) identifying in said scene, said object which semantic information is comprised in said instruction.

According to another aspect, the present disclosure concerns also a device for identifying an object in a scene, said device comprising one or more processors configured for
a) Receiving an instruction in at least Natural Language, wherein said instruction comprises at least a semantic information related to said object,
b) Obtaining grounded semantic information of said scene from a conversion of a visual description of an image of said scene into semantic information,
c) Based on said grounded semantic information and on said semantic information related to said scene comprised in said instruction, determining whether said object can be identified,
d) Generating at least a query in natural language, said query comprising a request for providing at least additional semantic information related to said object,
e) Receiving a response to said at least one query and iterate c) to e),
f) identifying in said scene, said object which semantic information is comprised in said instruction.

In a particular embodiment, the different steps of the methods disclosed are determined by computer program instructions or are implemented by a silicon chip comprising transistors suitable for constituting logic gates of a hard-wired non-programmable logic.

Consequently, the present invention concerns also a computer program on an information medium, this program being able to be implemented in a controller computer, this program including instructions suitable for implementing the steps of the methods as described above.

This program can use any programming language, and be in the form of source code, object code, or intermediate code between source code and object code, such as in a partially compiled form, or in any other desirable form.

The present invention concerns also a recording medium readable by at least one computer and having recorded thereon at least one computer program including instructions for executing the steps of the methods of according to any of the embodiments of the present disclosure.

The information medium can be any entity or device capable of storing the program. For example, the medium can include a storage means, such as a ROM, a non-volatile memory of flash type or else a magnetic recording means, for example a hard disk. Moreover, the information medium can be a transmissible medium such as an electrical or optical signal, which can be routed via an electrical or optical cable, by radio or by other means. The program according to the invention can in particular be downloaded over a network of Internet type. Alternatively, the information medium can be an integrated circuit into which the program is incorporated, the circuit being suitable for executing or being used in the execution of the methods in question

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG.1 is a flowchart of a method according to an embodiment of the present disclosure.
- FIG.2 is a first example of an implementation of the method according to an embodiment of the present disclosure,
- FIG.3 is second example of an implementation of the method according to an embodiment of the present disclosure,
- FIG.4 is a representation of sample images for fine tuning the present method according to an embodiment,
- FIG.5 is a device according to an embodiment of the present disclosure.
- FIG.6 is a flowchart a method according to an embodiment of the present disclosure.

### DETAILED DESCRIPTION OF EMBODIMENTS

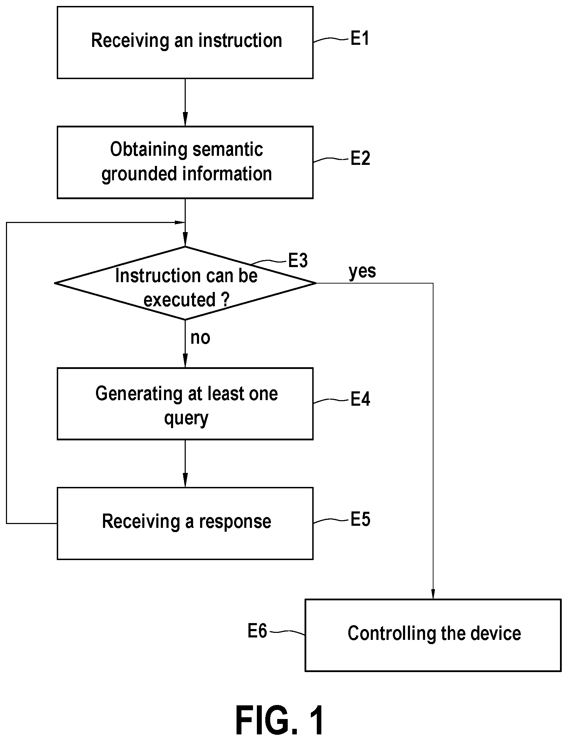

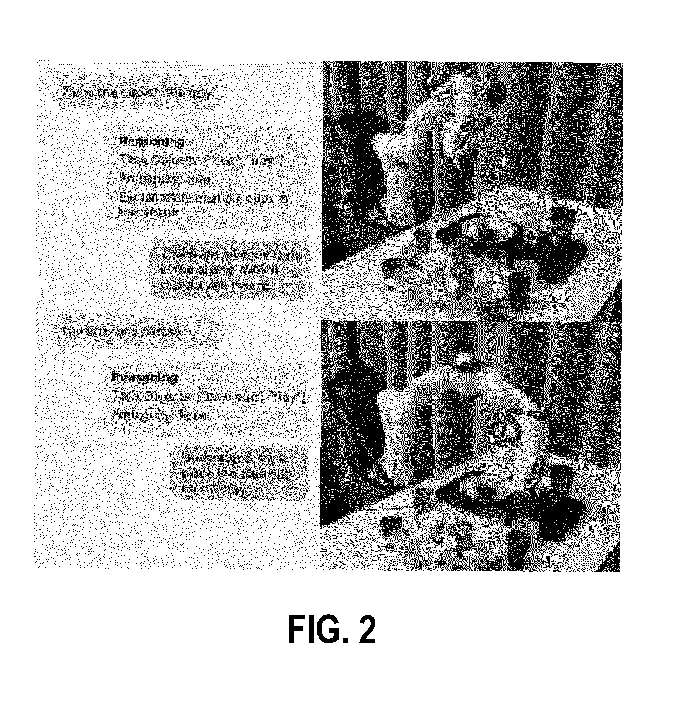

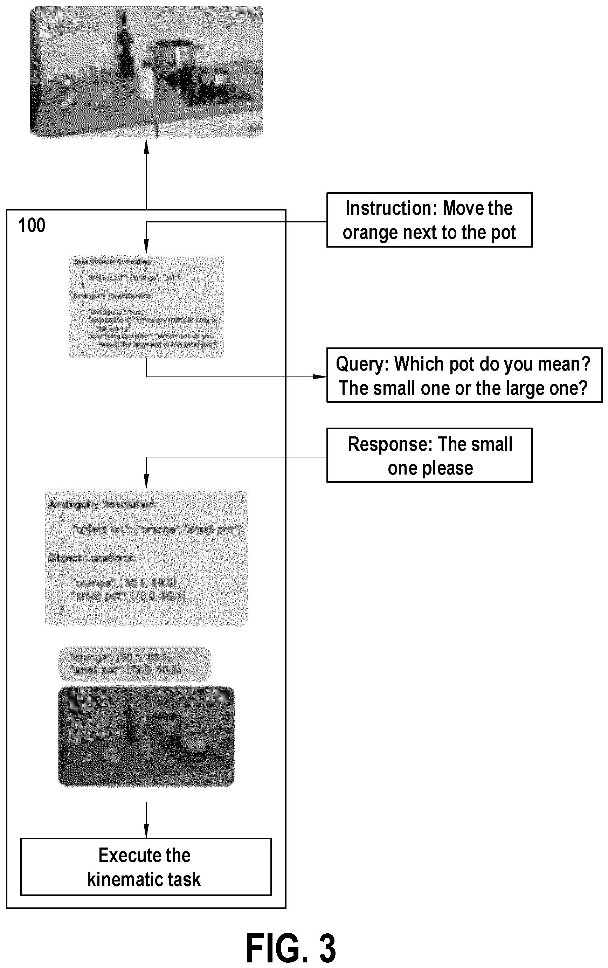

With reference to figure 1 and with the examples of implementation of figures 2 and 3, we will now describe the main steps of a method for controlling a device for executing a kinematic task in a scene.

The present disclosure provides an efficient method to control a device by resolving ambiguities that can be contained in the control command received by the device.

According to some embodiments the device to be controlled can be a device like a robot or any autonomous device capable of performing an action further to a reception of request for performing such action. Such action can also be a kinematic task.

The request to perform such a kinematic task can be received by a user or can also be received from another device.

In the following description, the device is located in a scene. Such a scene can comprise one or several objects and this action can be related to at least one of these objects in connection with the scene.

For instance, as illustrated in figure 2, the device is a robot and the scene where the robot is located, contains a plurality of cups and a tray positioned on a table.

In figure 3, the device, such as a robot, is not shown. The scene comprises a kitchen worktop on which are positioned a cooking hob, two bottles, a banana, an orange, an apple, a large pot and a smaller pot (on the cooking hob), and a cup.

One aim of the present invention is therefore to provide an efficient method to control a device for performing an action. The present disclosure provides a novel method for resolving ambiguities that can be contained in the instruction received by the device for performing the task according to the instruction. Such an ambiguity may be due to the semantics contained in the instructions regarding the configuration of the scene. By configuration of the scene, we can understand, but not limited to, the objects of the scene, their description, their location in the scene or the relative positioning of the objects in the scene.

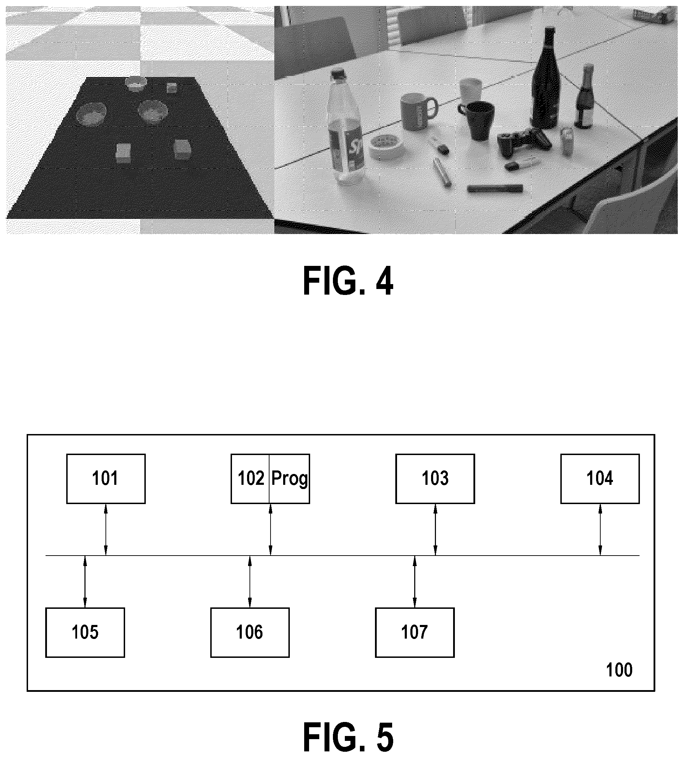

The device, which can be device 100 of figures 3 and 4, receives an instruction for executing a kinematic task in a scene where it is located, step E1. The device 100 comprises capturing means, such as a camera, for being able to view the scene where it is located and capturing at least an image of the scene. Such as instruction can be "place the cup on the tray" in the example of figure 2 or "move the orange next to the pot" in the example of figure 3.

The instruction is at least an instruction in natural language, which comprises at least semantic information. In some embodiments, the instruction can also contain visual information. For instance, the device can display an image of the scene and the instruction can be the reception of a visual selection of at least an object, or a location, or can also be a movement executed on the display. The instruction can be received from a user or from another device.

As the semantic used in the instruction may be too broad in view of the scene, it may generate ambiguities, making impossible the execution of the instruction or at least resulting in an execution of the instruction which is erroneous or not enough precise. The present disclosure interprets the natural language instruction within the context of the observed scene and can assess the clarity or ambiguity of the specified instruction. For instance, the semantic used in the instruction received may contain an object defined by its class, such as cup, apple, mug, chair, car... with or without any additional attribute enabling to distinguish the object from another instance of a same class object in the scene.

In a step E2, semantic grounded information of the scene is obtained from a conversion of a visual description of an image of the scene into semantic information.

A "grounded semantic description" is a semantic description that is explicitly tied to a perceptible element (image, video, sound, real-world object, etc.). It anchors concepts in concrete real-world elements, the ones of the scene in the present disclosure. It gives a personalized description of one instance of an object associated with the class of the object. In the present disclosure, the semantic information associated with an object in the instruction can be the class of an object. The grounded semantic information of the object can be the class of the object associated with at least one attribute of the object determined to distinguish said object among a plurality of objects of the same class. Said attribute can be related to the color, the size, the location in the image of the scene. In some cases, several attributes may be needed to distinguish one instance from another, for instance when there are several blue cups, it may be needed to distinguish them by adding an attribute related to their size, or to their position in the scene.

Therefore, grounded semantic information is in opposition to the semantic information used in the present disclosure which is a textual representation of the meaning of an object or scene without necessarily being tied to a specific perceptual reference. Semantic information can be abstract or generic, without a direct connection to a real-world image or visual element.

As mentioned earlier, a semantic information can comprise an object identified by a class and one or more attributes.

More generally, a "semantic description" can be abstract, whereas a "grounded semantic description" is specific to a real visual or sensory perception. In other words, a grounded semantic information can be used to determine a specific instance of an object in the scene. In other words, a grounded semantic information can be used to determine the unicity of an object.

In one embodiment, a visual language model, VLM, is used to provide such a grounded information of the scene into semantic information. Using a VLM is particularly advantageous to associate semantic information with an object visually detected into an image of the scene. In some embodiments, a VLM like Molmo, reference [9] is advantageously used. Indeed, given its unique object pointing skill, it allows to detect and ground objects in the image directly via the VLM, without requiring a separate open vocabulary object detector.

In other embodiments, VLMs such as Llava, reference [26], Qwen2-VL reference [27], Pixtral reference [28] may be used.

In other embodiments, a combination of models can be used for obtaining grounded semantic information. For instance, an object detection or segmentation model, for instance a semantic or panoptic segmentation model, associated with a semantic grounding model may be used.

Upon reception of the instruction, a semantic analysis of the instruction is performed.

In some embodiments, the instruction received comprises semantic information associated with at least one object of the scene. Further to the semantic analysis, at least one object or a list of objects can be detected in the instruction and semantic grounded information of the detected objects is performed.

In a step E3, based on the grounded semantic information and on the semantic information related to the scene comprised in the instruction, a determination is performed whether said instruction can be executed. Said determination can correspond to a detection of an ambiguity or lack of clarity into the instruction. It can also correspond to a determination of a lack of precision in the semantic information, and for instance it can correspond to a lack of attributes of an object contained in said semantic information.

It can also be a determination based on the grounded information related to an object and to the semantic information related to said object comprised in the instruction. It can also be determined if at least one object which semantic information is comprised in the instruction can be identified in an image of the scene by using the grounded semantic information.

In some embodiments, said determination whether said instruction can be executed can comprise the following sub-steps:
- Determining the class of at least an object in semantic information associated with the instruction
- Selecting the instances of the objects in the image of said scene having the same class as the class of the objects in the instruction,
- Based on the grounded information associated with said instances of objects and the semantic information associated with the object of said class in the instruction,
   o Determination if said object which class is comprised in said semantic information associated with said instruction is uniquely identified among said selected instances,
   o Determining that said instruction cannot be executed if said instance cannot be uniquely identified and
   o Determining that said instruction can be executed if said instance can be uniquely identified

In some embodiments, determining whether the instruction can be performed can comprise a comparison between the grounded semantic information of the scene and the semantic information of the scene comprised in the instruction.

The grounded semantic information can be a list of objects, comprising a grounded semantic description of the objects. The grounded semantic description can comprise, for the detected objects, their names (class such as cup, bottle...), attributes related to their color, size, location in the scene, and more generally any attribute that can distinguish an object from another object in the scene.

In some embodiments, when the semantic information of the instruction comprises a semantic class of an object and at least one attribute of this object, determining whether said instruction can be executed can comprise a comparison between said at least one attribute of the object and attributes of objects of the same class comprised in the grounded semantic information. If said comparison can uniquely identify the object which class and attribute is comprised in the semantic information of the instruction, the instruction can be executed. If said comparison cannot uniquely identify the object which class and attribute is comprised in the semantic information of the instruction, the instruction cannot be executed.

With regards to the example of figure 2, the scene comprises multiple cups of different colors, white, orange, red, blue, brown, black, green.

The instruction received is "place the cup on the tray". The grounded semantic information of the scene can be the following, in a non limitative way, additional grounded semantic information can be provided:
a. A brown tray is located on a table,
b. A plate is located on the tray,
c. The plate contains a yellow apple, a red apple and a yellow lemon,
d. A transparent glass and a red glass with yellow patterns are located on the tray,
e. A blue cup, 4 red cups, a yellow cup, a transparent glass, three white cups, a purple cup and a brown cup are located on the table.

The semantic information comprised in the instruction comprises "cup" and "tray". To detect whether said instruction can be executed, the words "cup" and "tray" are searched as semantic information in the grounded semantic information of the scene. The grounded semantic information of the scene comprises "cup" and "tray" as semantic information. The tray can be identified in the scene, as there is only one tray, therefore there is no need to obtain additional semantic information to be able to select the tray. However, there are multiple cups in the grounded semantic information. Therefore, in this example, based on the semantic information comprised in the instruction and on the grounded information, the instruction cannot be executed.

With regards to the example of figure 3, the scene comprises a kitchen worktop on which are positioned a cooking hob, two bottles, a banana, an orange, an apple, a large pot and a smaller pot (on the cooking hob), and a cup.

The instruction received is "Move the orange next to the pot". The grounded semantic information of the scene can be the following, in a non-limitative way, additional grounded semantic information can be provided:
a. A cooking hob is located on a kitchen worktop,
b. A small pot and a big pot are located on the cooking hob,
c. A bottle of wine is located on the worktop on the left side of the cooking hob,
d. An orange, a banana and an apple are located on the worktop on the left side of the cooking hob,
e. A white cup with a blue pattern is located on the worktop on the left side of the cooking hob,
f. A water bottle is located on the worktop on the left side of the cooking hob,
g. A transparent glass is located on the worktop on the right side of the cooking hob.

The location is indicated into brackets on figure 3, under the forms of coordinate of the orange [30,5;68,5] and the small pot [78,0;56,5]. The semantic information comprised in the instruction comprises "orange" and "pot". To detect whether said instruction can be executed, the words "orange" and "pot" are searched as semantic information in the grounded semantic information of the scene. The grounded semantic information of the scene comprises "orange" and "pot" as semantic information. The orange can be identified in the scene, as there is only one orange, therefore there is no need to have additional semantic information to be able to select the orange. However, there are multiple pots in the grounded semantic information. Therefore, in this example, based on the semantic information comprised in the instruction and on the grounded information, the instruction cannot be executed.

In some embodiments, a message can be generated, indicating the decision of not executing the instruction. In some embodiments, said decision can comprise information in natural language for explaining the reason why the instruction is not executed.

In some embodiments, said information in natural language for explaining the reason why the instruction is not executed is based on a comparison between the grounded information of the scene and the semantic information comprised in said instruction.

For instance, in the example of figure 2, said information in natural language for explaining the reason why the instruction is not executed is "there are multiple cups in the scene".

For instance, in the example of figure 3, said information in natural language for explaining the reason why the instruction is not executed is "there are multiple pots in the scene".

Back to figure 1, when the instruction cannot be executed, at least one query is generated in natural language, comprising a request for providing at least additional semantic information related to the scene, step E4. Said query being generated in natural language can be understood by a user of the device.

According to some embodiments, the additional semantic information can comprise at least an attribute that enable to identify uniquely one object in said scene. For instance, said attribute can be related to a color, a size, a location in the scene that enable to select an object based on said additional semantic information and on said grounded information of the scene. More precisely, said attribute can enable to select an object based on said additional semantic information related to said object and on said grounded information related to said object in the scene.

According to some embodiments, the query comprises at least said information in natural language for explaining the reason why the instruction is not executed.

According to some embodiments, the query comprises at least said information in natural language for explaining the reason why the instruction is not executed and a request to provide additional semantic information related to said information for explaining the reason why the instruction is not executed. Therefore, the user or the device responding to the query may be able to better understand the expected response and select the additional semantic information which enable to execute the instruction.

According to some embodiments, said request comprises a request to select one object among a plurality of objects of the scene, wherein said plurality of objects in said request are associated with associated grounded semantic information.

According to some embodiments, when the object which semantic information is comprised in said instruction cannot be uniquely identified in said scene, generating a non execution of the instruction, the method comprises
- Identifying at least one additional grounded semantic information associated with said object not uniquely identified wherein said additional grounded semantic information enables to characterize uniquely said object,
- Wherein said query comprises a request to select said object according to said at least one additional grounded semantic information.

As can be seen on figure 2, the query comprises at least said information in natural language for explaining the reason why the instruction is not executed for instance, "there are multiple cups in the scene", and the query contains a request to provide additional semantic information, for instance, "which cup do you mean? In such an example, the query does not comprise a request to select the object according to additional grounded semantic information. If this would be the case, the request to provide additional semantic information could be, as an example, either "can you specify the color of the cup?" or "can you select one of the red, white, ... blue cup?"

As can be seen on figure 3, the query comprises at least said information in natural language for explaining the reason why the instruction is not executed "there are multiple pots in the scene" and the query contains a request to provide additional semantic information "which pot do you mean? The large pot or the small pot?" In such an example, the query comprises a request to select the object according to additional grounded semantic information which is here "small" or "large". This additional semantic information enables to identify uniquely the object which semantic instruction is contained in the instruction.

Providing a query comprising a request to select the object according to additional grounded semantic information, provides significant performance in terms of the accuracy of the received response. Indeed, the receiver of the query (user or another device) can better understand the additional semantic information that is expected. Furthermore, providing the explanation why the instruction cannot be executed can also greatly improve the accuracy of the response generated.

In a step E5, a response is received and the test of step E3 is performed with the additional semantic information received in the response. This additional semantic information enriches the semantic information contained in the instruction.

According to some embodiments, the response is received in Natural language.

According to some embodiments, receiving a response to said at least one query comprises one of:
a. Receiving a response in natural language,
b. Receiving a visual response as a pointer identifying at least one location on said image.

Steps E3 to E5 are iterated as long as the instruction cannot be executed.

Once the response to the query is received, additional semantic information is received in the response and this additional semantic information enriches the prior semantic information of the instruction. Therefore, based on said grounded semantic information and on the semantic information related to said scene comprised in the instruction and updated by the semantic information received in the response, it is determined whether said instruction can be executed, and when said instruction cannot be executed. The steps E3 to E5 are iterated as long as the instruction cannot be executed.

When the instruction can be executed, the device can be controlled for executing a kinematic task based on the instruction. This step can be executed later on or immediately.

In some embodiments, before executing the instruction, an additional step of determining a location of at least one object in the scene when said instruction comprises at least said one object, is performed. Said detection can be advantageous when said instruction relates to an action on said object and enables better grasping of said object in the scene.

In some embodiments, said step can be performed using a segmentation model such as Segment Anything (SAM) as disclosed in reference [26].

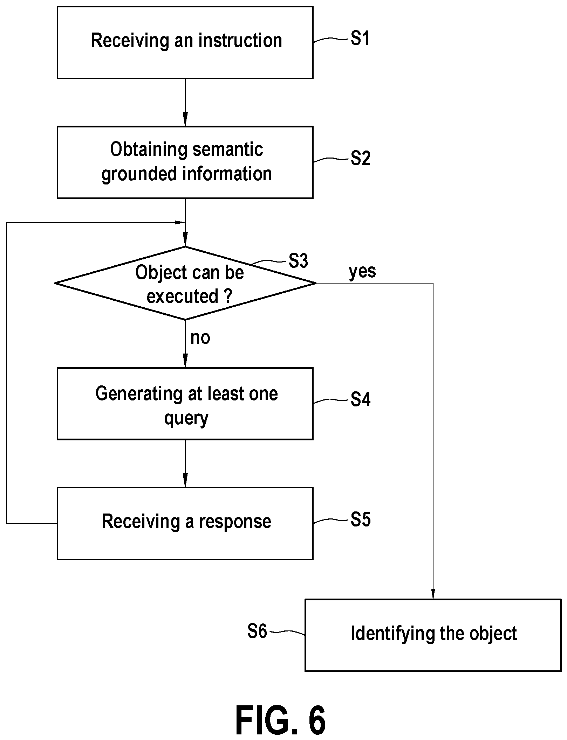

Figure 5 represents a schematic representation of a device for implementing the method as described in reference to figure 1 and later on in figure 6.

Figure 5 illustrates an example of a hardware architecture 100 of a device enabling the implementation of a method according to the present disclosure, as represented, for example, in Figure 1 or 6. This hardware architecture corresponds to that of a computer.

The hardware architecture 100 includes one or more processors 101 (only one is shown in Figure 2) implementing a method according to the present disclosure, a read-only memory 102 (ROM), a non-volatile rewritable memory 103 (such as EEPROM or Flash NAND), a volatile rewritable memory 104 (such as RAM), a communication interface 105, for instance an internet connection. In some embodiments, it can also comprise a display 106, for interacting with a user and for instance for displaying an image of the scene or for receiving a visual pointer on an object.

In some embodiments, it can also be part of a robot or it can be used to control a robot. In this last alternative, it can comprise an interface 107, wired or wireless, for communicating with the robot and sending instructions to the robot and receiving at least an image of the scene from the robot and captured by the robot. When device 100 is part of a robot, it comprises one or more additional modules, not represented on figure 5 for executing the instruction. These additional modules may be related to the function of the robot.

The read-only memory 102 serves as a storage medium in accordance with an exemplary embodiment of the invention, readable by the processor(s) 101, and on which is stored a computer program Prog, in accordance with an exemplary embodiment of the invention. This program contains instructions for executing steps of the method according to one or more embodiments of the invention. Alternatively, the computer program Prog is stored in the non-volatile rewritable memory 103.

The computer program Prog may enable the device 100 to implement at least part of the method in accordance with the present disclosure, as illustrated, for example, in Figure 1.

This computer program Prog may thus define functional and software modules configured to implement the steps of a method in accordance with an exemplary embodiment of the invention, or at least part of these steps. These functional modules rely on or control the hardware elements 101, 102, 103, 104, 105 of the previously mentioned device 100.

According to another aspect, the invention can also concern a method for identifying an object in a scene. More precisely, the present disclosure can concern a method for identifying a personalized instance of an object in a scene.

To this end, figure 6 represents an embodiment of such a method.

The device, which can be device 100 of figures 3 and 4, receives an instruction, step S1. The device 100 comprises capturing means, such as a camera, for being able to view the scene where it is located and capture at least an image of the scene. Such an instruction can be "place the cup on the tray" in the example of figure 2 or "move the orange next to the pot" in the example of figure 3.

The instruction is at least an instruction in natural language, which comprises at least semantic information. In some embodiments, the instruction can also contain visual information. For instance, the device can display an image of the scene and the instruction can be the reception of a visual selection of at least an object, or a location, or can also be a movement executed on the display. The instruction can be received from a user or from another device.

The semantic information contained in the instruction comprises semantic information about an object. The instruction may refer for instance to an action related to said object.

As the semantic used in the instruction may be too broad in view of the scene, it may generate ambiguities, making impossible the identification of the object contained in the semantic information of the instruction. For instance, the semantic used in the instruction received may contain an object defined by its class, such as cup, apple, mug, chair, car..with or without any additional attribute enabling to distinguish the object from another instance of a same class object in the scene.

In a step S2, semantic grounded information of the scene is obtained from a conversion of a visual description of an image of the scene into semantic information.

In one embodiment, a visual language model, VLM, is used to provide such a grounded information of the scene into semantic information. Using a VLM is particularly interesting to associate semantic information with an object visually detected into an image of the scene. In some embodiments, a VLM like Molmo, reference [9] is advantageously used. Indeed, given its unique object pointing skill, it allows to detect and ground objects in the image directly via the VLM, without requiring a separate open vocabulary object detector.

In other embodiments, VLMs such as Llava, reference [26], Qwen2-VL reference [27], Pixtral reference [28] could be used.

In other embodiments, a combination of models can be used for obtaining grounded semantic information. For instance, an object detection or segmentation model, for instance a semantic or panoptic segmentation model, associated with a semantic grounding model could be used.

Upon reception of the instruction, a semantic analysis of the instruction is performed.

Further to the semantic analysis, at least one object or a list of objects can be detected in the instruction and semantic grounded information of the detected objects is performed.

In a step S3, based on the grounded semantic information and on the semantic information related to the object comprised in the instruction, a determination is performed whether said object comprised in the semantic information of the instruction can be identified. Said determination can correspond to a detection of an ambiguity or lack of clarity into the instruction. It can also correspond to a determination of a lack of precision in the semantic information, and for instance it can correspond to a lack of attributes of an object contained in said semantic information.

It can also be a determination based on the grounded information related to an object and to the semantic information related to said object comprised in the instruction. It can also be determined if at least one object which semantic information is comprised in the instruction can be identified in an image of the scene by using the grounded semantic information.

In some embodiments, said determination whether said object can be detected can comprise the following sub-steps:
- Determining the class of at least an object in the semantic information associated with the instruction,
- Selecting the instances of the objects in the image of said scene having the same class as the class of the objects in the instruction,
- Based on the grounded information associated with said instances of objects and the semantic information associated with the object of said class in the instruction,
   o Determining if said object which class is comprised in said semantic information associated with said instruction is uniquely identified among said selected instances,
   o Determining that said instruction cannot be executed if said instance cannot be uniquely identified and
   ∘ Determining that said instruction can be executed if said instance can be uniquely identified.s

In some embodiments, determining whether said object can be detected can comprise a comparison between the grounded semantic information of the scene and the semantic information of the scene comprised in the instruction.

The grounded semantic information can be a list of objects, comprising a grounded semantic description of the objects. The grounded semantic description can comprise, for the detected objects, their names (class such as cup bottle...), attributes related to their color, size, location in the scene, and more generally any attribute that can distinguish an object from another object in the scene.

In some embodiments, when the semantic information of the instruction comprises a semantic class of an object and at least one attribute of this object, determination whether said object can be detected can comprise a comparison between said at least one attribute of the object and attributes of objects of the same class comprised in the grounded semantic information. If said comparison can uniquely identify the object which class and attribute is comprised in the semantic information of the instruction, the object can be detected. If said comparison cannot uniquely identify the object which class and attribute is comprised in the semantic information of the instruction, the object comprised in the semantic information of the instruction cannot be detected.

With regards to the example of figure 2, the scene comprises multiple cups of different colors, white, orange, red, blue, brown, black, green.

The instruction received is "place the cup on the tray". The grounded semantic information of the scene can be the following, in a non-limitative way, additional grounded semantic information can be provided:
a. A brown tray is located on a table,
b. A plate is located on the tray,
c. The plate contains a yellow apple, a red apple and a yellow lemon,
d. A transparent glass and a red glass with yellow patterns are located on the tray,
e. A blue cup, 4 red cups, a yellow cup, a transparent glass, three white cups, a purple cup and a brown cup are located on the table.

The semantic information comprised in the instruction comprises "cup" and "tray". To detect whether the objects, cup and tray, present in the semantic information of the instruction, can be detected, the words "cup" and "tray" are searched as semantic information in the grounded semantic information of the scene. The grounded semantic information of the scene comprises "cup" and "tray" as semantic information. The tray can be identified in the scene, as there is only one tray, therefore there is no need to have additional semantic information to be able to select the tray. However, there are multiple cups in the grounded semantic information. Therefore, in this example, based on the semantic information comprised in the instruction and on the grounded information, the cup cannot be identified.

With regards to the example of figure 3, the scene comprises a kitchen worktop on which are positioned a cooking hob, two bottles, a banana, an orange, an apple, a large pot and a smaller pot (on the cooking hob), and a cup.

The instruction received is "Move the orange next to the pot". The grounded semantic information of the scene can be the following, in a non-limitative way, additional grounded semantic information can be provided:
a. A cooking hob is located on a kitchen worktop,
b. A small pot and a big pot are located on the cooking hob,
c. A bottle of wine is located on the worktop on the left side of the cooking hob,
d. An orange, a banana and an apple are located on the worktop on the left side of the cooking hob,
e. A white cup with blue pattern is located on the worktop on the left side of the cooking hob,
f. A water bottle is located on the worktop on the left side of the cooking hob,
g. A transparent glass is located on the worktop on the right side of the cooking hob.

The location is indicated into brackets on figure 3, under the forms of coordinate of the orange [30,5;68,5] and the small pot [78,0;56,5]. The semantic information comprised in the instruction comprises "orange" and "pot". To detect whether the orange and the pot can be identified, the words "orange" and "pot" are searched as semantic information in the grounded semantic information of the scene. The grounded semantic information of the scene comprises "orange" and "pot" as semantic information. The orange can be identified in the scene, as there is only one orange, therefore there is no need to have additional semantic information to be able to select the orange. However, there are multiple pots in the grounded semantic information. Therefore, in this example, based on the semantic information comprised in the instruction and on the grounded information, the pot cannot be identified.

In some embodiments, a message can be generated, indicating that the object cannot be identified and, in some embodiments, which object cannot be identified when there are more than one object which cannot be identified. In some embodiments, said decision can comprise information in natural language for explaining the reason why one object is not detected.

In some embodiments, said information in natural language for explaining the reason why the object is not identified is based on a comparison between the grounded information of the scene and the semantic information comprised in said instruction.

For instance, in the example of figure 2, said information in natural language for explaining the reason why the instruction is not executed is "there are multiple cups in the scene".

For instance, in the example of figure 3, said information in natural language for explaining the reason why the instruction is not executed is "there are multiple pots in the scene".

Back to figure 6, when at least one object cannot be identified, at least one query is generated in natural language, comprising a request for providing at least additional semantic information related to the scene, step S4. Said query being generated in natural language can be understood by a user of the device.

According to some embodiments, the additional semantic information can comprise at least an attribute that enable to identify uniquely one object in said scene. For instance, said attribute can be related to a color, a size, a location in the scene that enable to select an object based on said additional semantic information and on said grounded information of the scene. More precisely, said attribute can enable to select an object based on said additional semantic information related to said object and on said grounded information related to said object in the scene.

According to some embodiments, the query comprises at least said information in natural language for explaining the reason why the instruction is not executed.

According to some embodiments, the query comprises at least said information in natural language for explaining the reason why the object is not identified and a request to provide additional semantic information related to said information for explaining the reason why the object is not identified. Therefore, the user or the device responding to the query may be able to better understand the expected response and select the additional semantic information which enable to select the object present in the semantic information of the instruction.

According to some embodiments, said request comprises a request to select one object among a plurality of objects of the scene, wherein said plurality of objects in said request are associated with associated grounded semantic information.

According to some embodiments, when the object which semantic information is comprised in said instruction cannot be uniquely identified in said scene, generating a non-identification of the object, the method comprises
- Identifying at least one additional grounded semantic information associated with said object not uniquely identified wherein said additional grounded semantic information enables to characterize uniquely said object,
- Wherein said query comprises a request to select said object according to said additional grounded semantic information.

As can be seen on figure 2, the query comprises at least said information in natural language for explaining the reason why the object is not identified, for instance, "there are multiple cups in the scene" and the query contains a request to provide additional semantic information; for instance, "which cup do you mean? In such an example, the query does not comprise a request to select the object according to additional grounded semantic information. If this would be the case, the request to provide additional semantic information could be, as an example, either "can you specify the color of the cup?" or "can you select one of the red, white, ... blue cup?"

As can be seen on figure 3, the query comprises at least said information in natural language for explaining the reason why the object is not detected, for instance, "there are multiple pots in the scene" and the query contains a request to provide additional semantic information, for instance, "which pot do you mean? The large pot or the small pot?" In such an example, the query comprises a request to select the object according to additional grounded semantic information which is here "small" or "large". This additional semantic information enables to identify uniquely the object which semantic instruction is contained in the instruction.

Providing a query comprising a request to select the object according to additional grounded semantic information, provides significant performance in terms of the accuracy of the received response. Indeed, the receiver of the query (user or another device) can better understand the additional semantic information that is expected. Furthermore, providing the explanation why the object is not detected can also greatly improve the accuracy of the response generated.

In a step S5, a response is received and the test of step S3 is performed.

According to some embodiments, the response is received in Natural language.

According to some embodiments, receiving a response to said at least one query comprises one of:
a. Receiving a response in natural language,
b. Receiving a visual response as a pointer identifying at least one location on said image.

Steps S3 to S5 are iterated as long as the object is not detected.

Once the response to the query is received, additional semantic information is received in the response and this additional semantic information enriches the prior semantic information of the instruction. Therefore, based on said grounded semantic information and on the semantic information related to said scene comprised in the instruction and updated by the semantic information received in the response, it is determined whether the object can be detected. The steps S3 to S5 are iterated as long as the object cannot be detected.

At step S6, the object is detected or identified.

When the object can be detected, additional optional steps can be foreseen.

For instance, this method for detecting an object can be applied for controlling a device for executing the instruction. The device can be controlled for executing a kinematic task based on the instruction. This step can be executed later or immediately.

In some embodiments, the method can also comprise an additional step of determining a location of at least one object in the scene. Said detection can be advantageous when said instruction relates to an action on said object and enables better grasping of said object in the scene.

In some embodiments, said step can be performed using a segmentation model such as Segment Anything (SAM) as disclosed in reference [26].

In some embodiments of figures 1 and 6, when using Molmo as VLM, Molmo provides a location of the object in the scene and therefore provides said location information without needing to determine said location separately.

In some embodiments, and as illustrated on figures 2 and 3, the outputs generated at each of the steps of the methods of figures 1 and 6 can be described as JSON, which can make parsing more easily. For instance, the structured generation approach of reference [30] can be used. In this method, JSON schemas are translated into regular expressions that can be formulated as Finite State Machines (FSM). The FSM allows to construct an index of all non-zero probability tokens for each step of the text generation process. The resulting algorithm does not add overhead in terms of compute time, as it has a time complexity of O(1), and only a small overhead in terms of memory, which has complexity O(N), where N is the size of the vocabulary used, generally much smaller compared to the billions of parameters of the network.

In the present disclosure, two different JSON schemas are defined, which can be used to guarantee the desired reasoning structure illustrated in Fig. 3. The object grounding schema consists of a list of strings and can be used for both the instruction object grounding as well as for the ambiguity resolution steps. On the other hand, an ambiguity classification schema consists of a dictionary with three keys: ambiguity, explanation and clarifying question. Ambiguity is a boolean value, while explanation and clarifying questions are strings. This approach allows to guarantee that the output will follow a pre-defined JSON schema for its structured output, which in turn guarantees that downstream tasks are able to reliably parse the prediction of the method. By using JSON description, the reasoning of the method is structured such that downstream tasks, such as object mask prediction and policy execution, can reliably parse the predicted information.

The present disclosure uses a pre-trained Molmo VLM model but can be fine-tuned as described hereafter, to be more performant and accurate to the present disclosed methods of figures 1 and 6.

To both train and evaluate the present disclosure, two datasets of labeled image and task description pairs are created. The first dataset contains image-instruction pairs from a simplified simulated domain adapted from reference [21]. The scene consists of blocks and bowls of different colors placed on a table. The second dataset is built with real world images captured in an office and a kitchen environment, featuring a multitude of different objects. Samples from both datasets are depicted in Fig. 4, the first data set on the left side of figure 4 and the second data set on the right part of figure 4.

Each dataset consists of 40 images. For each image, 20 instructions descriptions are generated, for a total of 800 image-instruction pairs. Both ambiguous and unambiguous instruction descriptions are sampled, so that the resulting dataset is balanced.

A 50-50 train-test split is performed to ensure enough samples for evaluation purposes.

The model is trained from the pre-trained Molmo-7B-D-0924 VLM. To enable efficient fine-tuning, the Low-Rank Adaptation (LoRA), technique, reference [31], is used. LoRA freezes all pre-trained model weights and then injects trainable rank decomposition matrices, greatly reducing the total number of trainable parameters for fine-tuning. In particular, for the present disclosure, only LoRA adapters for the language model parameters are fine-tuned, while leaving the vision encoder untouched. Combined with training in bfloat16 format, this approach allows to fine-tune the 7B Molmo VLM on a single RTX A6000 (48GB) GPU. The model is trained using the AdamW optimizer, reference [32], for one single epoch with the following hyperparameters: batch size of 2, learning rate of 0.0001, and weight decay of 0.01.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### Experiments

The experiments investigate the following questions:
▪ Is the present disclosure able to ground task objects in the image?
▪ How effectively can it detect ambiguity in the task description?
▪ Is it able to reason about the user response and correctly resolve the original ambiguity?
▪ Does downstream policy execution improve when tasks are disambiguated with the present disclosure?

This is discussed in the following subsections.

### A. Ambiguity Resolution

The goal is to evaluate the three main steps of our reasoning process: task object grounding, ambiguity classification, and ambiguity resolution. For this evaluation, the test split from the dataset of figure 4 and described in relation with the fine tuning of the method is used. The present method is compared with two baselines: KnowNo, reference [21], as well as an ablated version of the present disclosed method called here AmbResVLM-prompt. AmbResVLM-prompt uses few-shot prompting instead of fine-tuning to steer the model output. The model is prompted with two examples from the dataset to provide it with context about the expected behavior. Both models use the same structured output as the JSON one described earlier.

A major difference of KnowNo compared to the disclosed method is that it requires the ground truth object list as input since it cannot reason over visual observations and operates with privileged information. Moreover, KnowNo does not reason about the human feedback. For this reason, KnowNo can only be compared to the disclosed method in the core capability of detecting task ambiguity. The results from this experiment are reported in Tab. I.

**Table 1**

| | | **Simulation** | | | | | **real world** | | | | |
|---|---|---|---|---|---|---|---|---|---|---|---|
| | | **Task Object Grounding** | **Ambiguity Classification** | | | **Ambiguity Resolution** | **Task Object Grounding** | **Ambiguity Classification** | | | **Ambiguity Resolution** |
| **Model** | **Obs Type** | IoU | Precision | Recall | F1 | Success | IoU | Precision | Recall | F1 | Success |
| KnowNo ref [21] | GT Obj List | - | 0,49 | 0,96 | 0,64 | - | - | 0,47 | 0,81 | 0,6 | - |
| AmbResVLM-prompt | RGB Image | 1.00 | 0,44 | 0,37 | 0,41 | 0,99 | 0,99 | 0,47 | 0,46 | 0,46 | 0,8 |
| AmbResVLM_fin etune | RGB Image | 1.00 | 0,52 | 0,97 | 0,68 | 0,99 | 1 | 0,48 | 0,78 | 0,59 | 0,75 |

In table 1, AmbRes-VLM-prompt refers to the present disclosed method without the fine tuning embodiment an AmbRes-VLM-finetune refers to the present disclosed method with the fine-tuning embodiment.

### Task Object Grounding

The task of object grounding is considered first. For this task, the Intersection over Union (IoU) is evaluated between the predicted set of objects and their ground truth. The results show that both the fine-tuned and the few-shot prompting versions of the present invention achieve impressive results, grounding the requested instruction relevant objects correctly between 99% and 100% of the time. As previously stated, KnowNo does not provide this feature and therefore is excluded from this evaluation.

### Ambiguity Classification.

The ability of the model to detect ambiguities in the task description is considered. To assess the classification performance, three common metrics are used: precision, recall, and F1. A notable result from this evaluation is that all three considered models have lower precision than recall, i.e., all models predict more false positives than false negatives. In other words, all models have a bias towards querying the user when in doubt. On one hand, this is positive, as it minimizes downstream task failures, but at the same time, it requires more effort than necessary from the user.

In the baseline comparison, it is first observed that the finetuned model always outperforms the zero-shot prompted model. Second, it is observed that finetuned model achieves similar results to KnowNo, slightly higher in the simulation environment (0.68 vs 0.64 F1 score), and slightly lower in the real environment (0.59 vs 0.60 F1 score). The reason for this discrepancy is that the real-world domain is visually more complex. While the present invention processes image inputs, KnowNo operates with ground-truth object information, and therefore it is not affected by the increased visual complexity. This result shows that AmbResVLM achieves performance on par with the baseline that does not support visual observations and operates with privileged information instead.

### Ambiguity Resolution.

The ability of the finetuned and the zero-shot prompted method is evaluated to interpret the feedback from the user and resolve the task ambiguity. As KnowNo cannot predict such information, it is excluded from this evaluation. Both zero-shot-prompt and - fine-tune achieve a success rate above 75%. One can notice that the prompt baseline achieves higher performance in this specific task compared to the fine-tuned one (80% vs 75%).

### B. Real World Policy Learning

The present disclosure's utility is validated for policy learning using TAPAS-GMM, reference [34], a state-of-the-art few-shot policy learning approach. TAPAS-GMM is a multi-stream method, i.e., it models the end-effector trajectory in the local coordinate frames of multiple task-relevant scene objects. These coordinate frames are called task-parameters and are automatically extracted from camera observations, reference [34], leveraging either a keypoint predictor, reference [35] or pose estimator, reference [36]. When using an image keypoint model, the depth image and camera parameters are used to project the 2D keypoint to a 3D keypoint, at which the coordinate frame is attached. The original implementation of TAPAS-GMM uses a keypoint predictor based on DINO features, reference [33] to achieve instance-level generalization across objects, reference [34]. Given multiple distinct scene objects, TAPAS-GMM then automatically selects the task-relevant object. However, both the keypoint detection and pose estimation rely on the objects in question being unambiguous and thus fail when given multiple object candidates of the same class. Consequently, in ambiguous scenes, ambiguity resolution is essential.

To this end, the present disclosure is integrated with TAPAS-GMM as follows. First, for a given task, five policy demonstrations are collected. When using the present disclosure, these can either be unambiguous or ambiguous, i.e., they contain multiple objects of the same class. However, for a fair comparison with the baseline method, unambiguous demonstrations are collected, and the ambiguity is only introduced during policy roll-out. This enables to investigate policy performance under different conditions of unambiguity and ambiguity. Next, the relevant task-parameters are annotated using the present disclosure (or the baseline model), yielding the location of the relevant objects. While these object locations could be used directly as task-parameters, they are instead used to query SAM2, reference [25] and then the centers of the predicted object masks are exploited as the object locations. Using SAM ensures that the predicted relative locations are consistent across task instances. This is a precaution, as the present disclosure was not specifically trained for predicting consistent keypoints. Using the predicted keypoints, TAPAS-GMM is fitted on the collected demonstrations. For inference in a new scene, the present invention is queried again (or the baseline) to get the location of the desired objects and thus parameterize the policy. The present disclosure is compared with the original implementation of TAPAS-GMM using DINO features. Additionally, a variant that uses the DINO keypoints to query SAM, similar to the present disclosure, is implemented. Finally, the prompted and fine-tuned variants of the present disclosure are compared. Three instructions are setup.

For each instruction, four scenarios are investigated: DistinctObjects (unambiguous), Color Clutter (color ambiguity), Instance Clutter (instance-level ambiguity), and Instance Transfer (instance-level ambiguity with transfer to a new object instance). Each condition is evaluated for 20 episodes. To disentangle ambiguity resolution and location prediction, both the object detection success rate and the policy success rate are reported.

| | **Place the Cup on the Tray** | | | | **Place the Bowl next to the Mug** | | | |
|---|---|---|---|---|---|---|---|---|
| **Model** | **Distinct Objects** | **Color Clutter** | **Instance Clutter** | **Instance Transfer** | **Distinct Objects** | **Color Clutter** | **Instance Clutter** | **Instance Transfer** |
| DINO ref [33], [34] | **100%** | **100%** | 90% | 0% | **100%** | **100%** | **100%** | 0% |
| DINO+SAM ref [25] | **100%** | **100%** | **100%** | 0% | **100%** | **100%** | **100%** | 0% |
| AmbResVLM-prompt | **100%** | **100%** | **100%** | **100%** | **100%** | **100%** | **100%** | **100%** |
| AmbResVLM_finetune | **100%** | **100%** | **100%** | **100%** | **100%** | **100%** | **100%** | **100%** |

**Tables 2: Object grounding success rate in the real-robot policy learning experiments.**

| | **Put the Bread on the Baking Tray** | | | | |
|---|---|---|---|---|---|
| **Model** | **Distinct Objects** | **Color Clutter** | **Instance Clutter** | **Instance Transfer** | **Mean** |
| DINO ref [33], [34] | **100%** | **100%** | 50% | 25% | 72.1% |
| DINO+SAM ref [25] | **100%** | **100%** | 45% | 30% | 72.9% |
| AmbResVLM-prompt | 0% | 0% | 20% | 15% | 76.7% |
| AmbResVLM_finetune | **100%** | **100%** | **90%** | **95%** | **98.8%** |

The detection rates in Tables 2 show the DINO baseline performing strongly in the unambiguous scenario and when faced with colored clutter. Adding clutter objects slightly affects the detection quality of the tray, but this is remedied by adding SAM. Overall, DINO discriminates clutter instances well for objects that are simple in shape and color, such as a blue cup. However, it struggles with visually more complex objects, such as a loaf of bread. Most crucially, when multiple instances of an object class are visible, it generally prefers the reference object that was used during policy training (e.g., the blue cup) over other visible object instances (e.g., a yellow cup). Consequently, it fails to transfer to variations of the tasks, such as grasping the yellow cup, as long as the (original) blue cup is present. Overall, it gives the user no control over which object instance it selects.

In contrast, the present disclosure not only generalizes to cluttered scenes but also transfers to such task variations as described. Besides simple generalization, such as color or size, this also enables the user to specify object instances by their relationship to other scene objects. For example, instead of taking "the bread from the plate", the robot can now also hand over the other bread that lies inside the pan.

| | **Place the Cup on the Tray_** | | | | **Place the Bowl next to the Mug** | | | |
|---|---|---|---|---|---|---|---|---|
| **Model** | **Distinct Objects** | **Color Clutter** | **Instance Clutter** | **Instance Transfer** | **Distinct Objects** | **Color Clutter** | **Instance Clutter** | **Instance Transfer** |
| DINO ref [33], [34] | 90% | 90% | 80% | 0% | 90% | 90% | 85% | 0% |
| DINO+SAM ref [25] | **95%** | 90% | **95%** | 0% | 95% | 95% | 90% | 0% |
| AmbResVLM-prompt | **95%** | **100%** | **95%** | 90% | **100%** | **100%** | **100%** | **100%** |
| AmbResVLM_finetune | **95%** | 95% | **95%** | **95%** | **100%** | **100%** | **100%** | **100%** |

**Tables 3: Policy execution success rate in the real-robot policy learning experiments.**

| | **Put the Bread on the Baking Tray** | | | | |
|---|---|---|---|---|---|
| **Model** | **Distinct Objects** | **Color Clutter** | **Instance Clutter** | **Instance Transfer** | **Mean** |
| DINO ref [33], [34] | **100%** | **100%** | 50% | 25% | 66.7% |
| DINO+SAM ref [25] | **100%** | **100%** | 45% | 30% | 69.6% |
| AmbResVLM-prompt | 0% | 0% | 20% | 15% | 67.9% |
| AmbResVLM_finetune | **100%** | **100%** | **90%** | **95%** | **97.1%** |

The policy success rates in Tables 3 paints a similar picture to the object detection rates. Using SAM slightly boosts policy success rates by providing location predictions that are more consistent across task instances. In addition, the success rates of the policy reflect the success rates of the detection. As long as objects are distinct, visually simple, and no instance transfer is required, DINO performs on par with our method. However, DINO becomes insufficient for more complex objects such as bread, and it fails to transfer when a different object instance is desired. The present disclosure solves both problems, thus empowering strong policy results across the board.

### References

[1] D. Honerkamp, M. B¨uchner, F. Despinoy, T. Welschehold, and A. Valada, "Language-grounded dynamic scene graphs for interactive object search with mobile manipulation," IEEE Robotics and Automation Letters, 2024.
[2] A. Werby, C. Huang, M. B¨uchner, A. Valada, and W. Burgard, "Hierarchical open-vocabulary 3d scene graphs for language-grounded robot navigation," Robotics: Science and Systems, 2024.
[3] K. Black, N. Brown, D. Driess, A. Esmail, M. Equi, C. Finn, N. Fusai, L. Groom, K. Hausman, B. Ichter, S. Jakubczak, T. Jones, L. Ke, S. Levine, A. Li-Bell, M. Mothukuri, S. Nair, K. Pertsch, L. X. Shi, J. Tanner, Q. Vuong, A. Walling, H. Wang, and U. Zhilinsky, "Pi0: A vision-language-action flow model for general robot control," arXiv preprint arXiv:2410.24164, 2024.
[4] W. Huang, C. Wang, R. Zhang, Y. Li, J. Wu, and L. Fei-Fei, "Voxposer: Composable 3d value maps for robotic manipulation with language models," in Proc. of the Conf. on Robot Learning, 2023.
[5] J. Duan, W. Yuan, W. Pumacay, Y. R. Wang, K. Ehsani, D. Fox, and R. Krishna, "Manipulate-anything: Automating real-world robots using vision-language models," in Proc. of the Conf. on Robot Learning, 2024.
[6] Octo Model Team, D. Ghosh, H. Walke, K. Pertsch, K. Black, O. Mees, S. Dasari, J. Hejna, C. Xu, J. Luo, T. Kreiman, Y. Tan, L. Y. Chen, P. Sanketi, Q. Vuong, T. Xiao, D. Sadigh, C. Finn, and S. Levine, "Octo: An open-source generalist robot policy," in Proc. of the Robotics: Science and Systems, 2024.
[7] M. Kim, K. Pertsch, S. Karamcheti, T. Xiao, A. Balakrishna, S. Nair, R. Rafailov, E. Foster, G. Lam, P. Sanketi, Q. Vuong, T. Kollar, B. Burchfiel, R. Tedrake, D. Sadigh, S. Levine, P. Liang, and C. Finn, "Openvla: An open-source vision-language-action model," arXiv preprint arXiv:2406.09246, 2024.
[8] J. Wen, Y. Zhu, J. Li, M. Zhu, K. Wu, Z. Xu, R. Cheng, C. Shen, Y. Peng, F. Feng et al., "Tinyvla: Towards fast, data-efficient visionlanguage-action models for robotic manipulation," IEEE Robotics and Automation Letters, 2025.
[9] I. Singh, V. Blukis, A. Mousavian, A. Goyal, D. Xu, J. Tremblay, D. Fox, J. Thomason, and A. Garg, "Progprompt: Generating situated robot task plans using large language models," in Proc. of the IEEE Int. Conf. on Robotics and Automation, 2023, pp. 11 523-11 530.
[10] J. Liang, W. Huang, F. Xia, P. Xu, K. Hausman, B. Ichter, P. Florence, and A. Zeng, "Code as policies: Language model programs for embodied control," in Proc. of the IEEE Int. Conf. on Robotics and Automation, 2023, pp. 9493-9500.
[11] M. Zawalski, W. Chen, K. Pertsch, O. Mees, C. Finn, and S. Levine, "Robotic control via embodied chain-of-thought reasoning," Proc. Of the Conf. on Robot Learning, 2024.
[12] E. Chisari, T. Welschehold, J. Boedecker, W. Burgard, and A. Valada, "Correct me if i am wrong: Interactive learning for robotic manipulation," IEEE Robotics and Automation Letters, 2022.
[13] H. Liu, S. Nasiriany, L. Zhang, Z. Bao, and Y. Zhu, "Robot learning on the job: Human-in-the-loop autonomy and learning during deployment," Proc. of the Robotics: Science and Systems, 2023.
[14] C. Celemin, R. P'erez-Dattari, E. Chisari, G. Franzese, L. de Souza Rosa, R. Prakash, Z. Ajanovi'c, M. Ferraz, A. Valada, J. Kober et al., "Interactive imitation learning in robotics: A survey," Foundations and Trends® in Robotics, 2022.
[15] L. X. Shi, Z. Hu, T. Z. Zhao, A. Sharma, K. Pertsch, J. Luo, S. Levine, and C. Finn, "Yell at your robot: Improving on-the-fly from language corrections," Proc. of the Robotics: Science and Systems, 2024.
[16] Y. Du, K. Konyushkova, M. Denil, A. Raju, J. Landon, F. Hill, N. de Freitas, and S. Cabi, "Vision-language models as success detectors," in Conf. on Lifelong Learning Agents, 2023.
[17] J. Duan, W. Pumacay, N. Kumar, Y. R. Wang, S. Tian, W. Yuan, R. Krishna, D. Fox, A. Mandlekar, and Y. Guo, "Aha: A visionlanguage-model for detecting and reasoning over failures in robotic manipulation," in Int. Conf. Learning Representations, 2025.
[18] C. Xiong, C. Shen, X. Li, K. Zhou, J. Liu, R. Wang, and H. Dong, "Aic mllm: Autonomous interactive correction mllm for robust robotic manipulation," Proc. of the Conf. on Robot Learning, 2024.
[21] A. Z. Ren, A. Dixit, A. Bodrova, S. Singh, S. Tu, N. Brown, P. Xu, L. Takayama, F. Xia, J. Varley, Z. Xu, D. Sadigh, A. Zeng, and A. Majumdar, "Robots that ask for help: Uncertainty alignment for large language model planners," in Proc. of the Conf. on Robot Learning, 2023.
[25] N. Ravi, V. Gabeur, Y.-T. Hu, R. Hu, C. Ryali, T. Ma, H. Khedr, R. R¨adle, C. Rolland, L. Gustafson, E. Mintun, J. Pan, K. V. Alwala, N. Carion, C.-Y. Wu, R. Girshick, P. Doll'ar, and C. Feichtenhofer, "Sam 2: Segment anything in images and videos," arXiv preprint arXiv:2408.00714, 2024.
[26] H. Liu, C. Li, Y. Li, and Y. J. Lee, "Improved baselines with visual instruction tuning," in Proc. of the IEEE Conf. Computer Vision Pattern Recognition, 2024.
[27] P. Wang, S. Bai, S. Tan, S. Wang, Z. Fan, J. Bai, K. Chen, X. Liu, J. Wang, W. Ge et al., "Qwen2-vl: Enhancing vision-language model's perception of the world at any resolution," arXiv preprint arXiv:2409.12191, 2024.
[28] P. Agrawal, S. Antoniak, E. B. Hanna, B. Bout, D. Chaplot, J. Chudnovsky, D. Costa, B. De Monicault, S. Garg, T. Gervet et al., "Pixtral 12b," arXiv preprint arXiv:2410.07073, 2024.
[30] B. T. Willard and R. Louf, "Efficient guided generation for llms," arXiv preprint arXiv:2307.09702, 2023.
[31] E. J. Hu, Y. Shen, P. Wallis, Z. Allen-Zhu, Y. Li, S. Wang, L. Wang, W. Chen et al., "Lora: Low-rank adaptation of large language models." in Int. Conf. Learning Representations, 2022.
[32] I. Loshchilov and F. Hutter, "Decoupled weight decay regularization,"in Int. Conf. Learning Representations, 2017.
[33] S. Amir, Y. Gandelsman, S. Bagon, and T. Dekel, "Deep vit features as dense visual descriptors," arXiv preprint arXiv:2112.05814, 2021.
[34] J. O. von Hartz, T. Welschehold, A. Valada, and J. Boedecker, "The art of imitation: Learning long-horizon manipulation tasks from few demonstrations," arXiv preprint arXiv:2407.13432, 2024.
[35] J. O. von Hartz, E. Chisari, T. Welschehold, W. Burgard, J. Boedecker, and A. Valada, "The treachery of images: Bayesian scene keypoints for deep policy learning in robotic manipulation," IEEE Robotics and Automation Letters, vol. 8, no. 11, pp. 6931-6938, 2023.
[36] E. Chisari, N. Heppert, T. Welschehold, W. Burgard, and A. Valada, "Centergrasp: Object-aware implicit representation learning for simultaneous shape reconstruction and 6-dof grasp estimation," IEEE Robotics sand Automation Letters, 2024.

## Claims

1. A method for controlling a device for executing a kinematic task in a scene, said method comprising:
- a) Receiving (E1) an instruction in at least Natural Language, wherein said instruction comprises at least a semantic information related to said scene,
- b) Obtaining (E2) grounded semantic information of said scene from a conversion of a visual description of an image of said scene into semantic information,
- c) Based on said grounded semantic information and on said semantic information related to said scene comprised in said instruction, determining (E3) whether said instruction can be executed, and when said instruction cannot be executed,
- d) Generating (E4) at least a query in natural language, said query comprising a request for providing at least additional semantic information related to said scene,
- e) Receiving (E5) a response to said at least one query and iterate c) to e),
- f) controlling (E6) the device for executing a kinematic task based on said instruction when said instruction can be executed.

2. The method of claim 1 wherein said instruction comprises semantic information associated with at least one object of said scene and said grounded semantic information is associated with at least one object of said scene.

3. The method of claim 2 wherein
- determining whether said instruction can be executed, is based on said grounded information related to said object and to said semantic information related to said object comprised in said instruction and
- said query comprises a request for providing at least additional semantic information related to said object in said scene.

4. The method of claim 3 wherein, determining whether said instruction can be executed comprises:
- Determining if said at least one object which semantic information is comprised in said instruction can be identified in said at least one image of said scene.

5. The method of any of claims 1 to 4 wherein, determining whether said instruction can be executed comprises:
- Comparing said grounded semantic information of said scene and said semantic information of the scene comprised in the instruction.

6. The method according to any of claims 1 to 5 wherein, determining whether said instruction can be executed comprises:
- Determining the class of at least an object in the semantic information associated with the instruction,
- Selecting the instances of objects in the image of said scene having the same class as the class of the at least one object in said instruction,
- Based on grounded information associated with said instances of said at least one object and the semantic information associated with the object of said class in the instruction,
o Determining if said object which class is comprised in said semantic information associated with said instruction is uniquely identified among said selected instances,
o Determining that said instruction cannot be executed if said instance cannot be uniquely identified and
o Determining that said instruction can be executed if said instance can be uniquely identified.

7. The method of claim 6 further comprising, when said object which semantic information is comprised in said instruction cannot be uniquely identified in said scene,
f) Identifying at least one additional grounded semantic information associated with said object not uniquely identified wherein said additional grounded semantic information enables to characterize uniquely said object,
Wherein said query comprises a request to select said object according to said additional grounded semantic information.

8. The method of any of claims 1 to 7 wherein receiving a response to said at least one query comprises one of:
a. Receiving a response in natural language,
b. Receiving a visual response as a pointer identifying at least one location on said image.

9. The method of any of claims 1 to 8 wherein said query comprises at least information in natural language for explaining the reason why the instruction is not executed.

10. The method of any of claims 2 and any of claims 3 to 9 wherein obtaining grounded semantic information of said scene from a conversion of a visual description of an image of said scene into semantic information, comprises
g) Detecting in an image of said scene, said at least one object which semantic information is comprised in said instruction,
h) Associating with at least said object which semantic information is comprised in said instruction, at least grounded semantic information of said object.

11. The method of any of claims 1 to 10 wherein said grounded semantic information is obtained using a visual language model (VLM).

12. The method of any of claims 2 and 3 to 11 further comprising, prior to executing said instruction when said instruction can be executed further to said response,
- obtaining special coordinates of said at least one object,
- segmenting said object using said special coordinates as a prompt input to a segmentation model.

13. A computer program set including instructions for executing the steps of the method of any one of claims 1 to 11 when said program set is executed by at least one computer

14. A recording medium readable by at least one computer and having recorded thereon at least one computer program including instructions for executing the steps of the method of any one of claims 1 to 11.

15. A robot for executing a kinematic task in a scene, comprising:
- an interface for receiving an instruction in at least Natural Language, wherein said instruction comprises at least a semantic information related to said scene,
- a processor for
a) Obtaining grounded semantic information of said scene from a conversion of a visual description of an image of said scene into semantic information,
b) Based on said grounded semantic information and on said semantic information related to said scene comprised in said instruction, determining whether said instruction can be executed, and when said instruction cannot be executed,
c) Generating at least a query in natural language, said query comprising a request for providing at least additional semantic information related to said scene
d) Receiving a response to said at least one query and iterate b) to d),
e) Executing a kinematic task based on said instruction when said instruction can be executed,

## Amended claims

### Amended claims in accordance with Rule 137(2) EPC.

1. A method for controlling a device for executing a kinematic task in a scene, said method comprising:
- a) Receiving (E1) an instruction in at least Natural Language, wherein said instruction comprises at least a semantic information related to said scene,
- b) Obtaining (E2) grounded semantic information of said scene from a conversion of a visual description of an image of said scene into semantic information,
- c) Based on said grounded semantic information and on said semantic information related to said scene comprised in said instruction, determining (E3) whether said instruction can be executed, and when said instruction cannot be executed,
- d) Generating (E4) at least a query in natural language, said query comprising at least information in natural language for explaining the reason why the instruction is not executed and a request for providing at least additional semantic information related to said scene,
- e) Receiving (E5) a response to said at least one query and iterate c) to e),
- f) controlling (E6) the device for executing a kinematic task based on said instruction when said instruction can be executed.

2. The method of claim 1 wherein said instruction comprises semantic information associated with at least one object of said scene and said grounded semantic information is associated with at least one object of said scene.

3. The method of claim 2 wherein
- determining whether said instruction can be executed, is based on said grounded information related to said object and to said semantic information related to said object comprised in said instruction and
- said query comprises a request for providing at least additional semantic information related to said object in said scene.

4. The method of claim 3 wherein, determining whether said instruction can be executed comprises:
- Determining if said at least one object which semantic information is comprised in said instruction can be identified in said at least one image of said scene.

5. The method of any of claims 1 to 4 wherein, determining whether said instruction can be executed comprises:
- Comparing said grounded semantic information of said scene and said semantic information of the scene comprised in the instruction.

6. The method according to any of claims 1 to 5 wherein, determining whether said instruction can be executed comprises:
- Determining the class of at least an object in the semantic information associated with the instruction,
- Selecting the instances of objects in the image of said scene having the same class as the class of the at least one object in said instruction,
- Based on grounded information associated with said instances of said at least one object and the semantic information associated with the object of said class in the instruction,
o Determining if said object which class is comprised in said semantic information associated with said instruction is uniquely identified among said selected instances,
o Determining that said instruction cannot be executed if said instance cannot be uniquely identified and
o Determining that said instruction can be executed if said instance can be uniquely identified.

7. The method of claim 6 further comprising, when said object which semantic information is comprised in said instruction cannot be uniquely identified in said scene,
a) Identifying at least one additional grounded semantic information associated with said object not uniquely identified wherein said additional grounded semantic information enables to characterize uniquely said object,
Wherein said query comprises a request to select said object according to said additional grounded semantic information.

8. The method of any of claims 1 to 7 wherein receiving a response to said at least one query comprises one of:
a. Receiving a response in natural language,
b. Receiving a visual response as a pointer identifying at least one location on said image.

9. The method of any of claims 2 and any of claims 3 to 8 wherein obtaining grounded semantic information of said scene from a conversion of a visual description of an image of said scene into semantic information, comprises
b) Detecting in an image of said scene, said at least one object which semantic information is comprised in said instruction,
c) Associating with at least said object which semantic information is comprised in said instruction, at least grounded semantic information of said object.

10. The method of any of claims 1 to 9 wherein said grounded semantic information is obtained using a visual language model (VLM).

11. A computer program set including instructions for executing the steps of the method of any one of claims 1 to 10 when said program set is executed by at least one computer

12. A recording medium readable by at least one computer and having recorded thereon at least one computer program including instructions for executing the steps of the method of any one of claims 1 to 10.

13. A robot for executing a kinematic task in a scene, comprising:
- an interface for receiving an instruction in at least Natural Language, wherein said instruction comprises at least a semantic information related to said scene,
- a processor for
a) Obtaining grounded semantic information of said scene from a conversion of a visual description of an image of said scene into semantic information,
b) Based on said grounded semantic information and on said semantic information related to said scene comprised in said instruction, determining whether said instruction can be executed, and when said instruction cannot be executed,
c) Generating at least a query in natural language, said query comprising at least information in natural language for explaining the reason why the instruction is not executed and a request for providing at least additional semantic information related to said scene
d) Receiving a response to said at least one query and iterate b) to d),
e) Executing a kinematic task based on said instruction when said instruction can be executed.
